# EUROPEAN PATENT SPECIFICATION

(11) **EP 3 995 362 B1**
(45) Date of publication and mention of the grant of the patent: **03.04.2024**
(21) Application number: 20206788.0
(22) Date of filing: 10.11.2020
(51) Int. Cl.: B60R 3/02

(54) **RETRACTABLE STEPS FOR A VEHICLE**
EINZIEHBARE STUFEN FÜR EIN FAHRZEUG
MARCHES RÉTRACTABLES POUR UN VÉHICULE

(43) Date of publication of application: 11.05.2022
(73) Proprietor: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: NILSSON, Magnus, 448 37 FLODA (SE); LINDBERG NILSSON, Erik, 417 47 GÖTEBORG (SE)
(74) Representative: Zacco Sweden AB

(56) References cited:
- JP-A- 2005 041 242
- JP-A- 2009 018 767
- JP-A- 2016 150 617
- JP-U- S6 190 658
- US-A1- 2009 273 154

## Description

### TECHNICAL FIELD

The present disclosure relates generally to the field of retractable steps. More particularly, it relates to retractable steps for a vehicle.

### BACKGROUND

Typically, children are small and have short legs which means that it is not easy for them to enter or exit a vehicle without assistance.

Since children are surprisingly heavy, providing assistance to them when entering or exiting a vehicle may be a burden or pose a risk of injury for the person providing the assistance. Considering that children like to do things themselves, entering or exiting the vehicle without assistance may pose a risk for the child such as putting their feet in unintentional places or being at risk of falling etc.

Therefore, there is a need for alternative approaches for providing assistance when entering or exiting a vehicle.

Patent publication JP 2005041242 A discloses a step device of a vehicle that is movable between a storage position and a use position. The step device is in the use position projecting outside of the vehicle body.

Patent publication JP 2009018767 A that corresponds to the preamble of claim 1, discloses a step for a vehicle, where the step in a use position is projecting outside of the vehicle body side in synchronization with the opening and rotating of a side door.

### SUMMARY

It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an apparatus is referred to herein, it is to be understood as a physical product. The physical product may comprise one or more parts, such as controlling circuitry in the form of one or more controllers, one or more processors, or the like.

It is an object of some embodiments to solve or mitigate, alleviate, or eliminate at least some of the above or other drawbacks.

According to a first aspect, this is achieved by a system for a vehicle having the features of claim 1.

The vehicle comprising a vehicle body, a vehicle door and at least one retractable step, wherein the vehicle body encloses a passenger compartment and defines a vehicle door opening and wherein the vehicle door is moveable relative to the vehicle door opening between a closed position and an open position.

The at least one retractable step is connected to the vehicle door and to the vehicle body, and the at least one connected retractable step is extendable by movement of the vehicle door in a direction from the closed position towards the open position.

An advantage of some embodiments is that alternative approaches for providing assistance when entering or exiting a vehicle are provided.

An advantage of some embodiments is that the at least one retractable step is automatically deployed when entering or exiting a vehicle.

An advantage of some embodiments is that small children are assisted in entering or exiting the vehicle.

An advantage of some embodiments is that a burden or risk of injury for the person providing assistance when entering or exiting the vehicle is either eliminated or reduced.

An advantage of some embodiments is that a risk for the child to put their feet in unintentional places or being at risk of falling, etc., is reduced.

An advantage of some embodiments is that the at least one retractable step is reliably deployed. In some embodiments, the at least one connected retractable step is retractable by movement of the vehicle door in a direction from the open position towards the closed position.

An advantage of some embodiments is that the at least one retractable step is automatically retracted by a closing movement of the vehicle door.

An advantage of some embodiments is that the at least one retractable step is reliably retracted. In some embodiments, the at least one retractable step is connected to the vehicle door and a vehicle structure enclosed in the vehicle body and/or in the passenger compartment.

An advantage of some embodiments is that the at least one retractable step may be fully integrated in the vehicle avoiding a bulky external component which may cause collisions with objects under the vehicle when deployed or be affected in its function by weather, e.g., snow, ice, etc.

According to the invention, the vehicle door comprises a detent mechanism configured for controlling a required force to close the vehicle door connected with the at least one retractable step when being in the open position.

An advantage of some embodiments is that a detent feel is provided by the detent mechanism when closing the vehicle door.

In some embodiments, the vehicle door comprises a locking arrangement configured for arranging the at least one connected retractable step in locking engagement to the vehicle door.

An advantage of some embodiments is that the at least one retractable step when connected to the vehicle door is secured by the locking arrangement to avoid the at least one retractable step to mistakenly be retracted.

In some embodiments, the locking arrangement comprises an electronically controlled plunger arranged to lock at least one latch of the at least one retractable step protruded into the vehicle door.

An advantage of some embodiments is that the electronically controlled plunger may automatically lock the at least one latch.

An advantage of some embodiments is that the electronically controlled plunger may be remotely controlled to lock the at least one latch.

According to the invention, the at least one retractable step comprises one belt or solid plates.

An advantage of some embodiments is that belt, chains, wires, and solid plats are retractable components which when retracted may be folded away and when extended may provide climbing support for entering or exiting a vehicle.

According to the invention, the at least one retractable step forms a climbing step for climbing in and/or out of the passenger compartment.

An advantage of some embodiments is that the climbing step provides assistance for entering or exiting a vehicle.

In some embodiments, the system is enabled by a user through settings in the vehicle or by activating a child lock on the vehicle door.

An advantage of some embodiments is that user control of the system is enabled.

A second aspect is a vehicle comprising the system according to the first aspect.

A third aspect is a method for a vehicle.

The vehicle comprising a vehicle body, a vehicle door and at least one retractable step, wherein the vehicle body encloses a passenger compartment and defines a vehicle door opening and wherein the vehicle door is moveable relative to the vehicle door opening between a closed position and an open position.

The method comprising activating a connection of the at least one retractable step to the vehicle door and to the vehicle body, extending the at least one connected retractable step by movement of the vehicle door in a direction from the closed position towards the open position.

An advantage of some embodiments is that alternative approaches for providing assistance when entering or exiting a vehicle are provided.

An advantage of some embodiments is that the at least one retractable step is automatically deployed when entering or exiting a vehicle.

An advantage of some embodiments is that small children are assisted in entering or exiting the vehicle.

An advantage of some embodiments is that a burden or risk of injury for the person providing assistance when entering or exiting the vehicle is either eliminated or reduced.

An advantage of some embodiments is that a risk for the child to put their feet in unintentional places or being at risk of falling, etc., is reduced.

An advantage of some embodiments is that the at least one retractable steps is reliably deployed.

In some embodiments, the method further comprises retracting the at least one connected retractable step by movement of the vehicle door in a direction from the open position towards the closed position.

An advantage of some embodiments is that the at least one retractable step is automatically retracted by a closing movement of the vehicle door.

An advantage of some embodiments is that the at least one retractable step is reliably retracted.

In some embodiments, the at least one retractable step is connected to the vehicle door and a vehicle structure enclosed in the vehicle body and/or in the passenger compartment.

An advantage of some embodiments is that the at least one retractable step may be fully integrated in the vehicle avoiding a bulky external component which may cause collisions with objects under the vehicle when deployed or be affected in its function by weather, e.g., snow, ice, etc.

An advantage of some embodiments is that an external ladder or stool is no longer needed for providing assistance when entering or exiting a vehicle, especially considering that an external ladder or stool takes up much space in the trunk of a vehicle.

An advantage of some embodiments is that the retractable step is less sensitive to uneven terrain compared to an external ladder or stool that would be hard to place without tumbling it over.

In some embodiments, the method further comprises controlling a required force to close the vehicle door when being in the open position by a detent mechanism comprised in the vehicle door.

An advantage of some embodiments is that a detent feel is provided by the detent mechanism when closing the vehicle door.

In some embodiments, the method further comprises locking the at least one connected retractable step to the vehicle door by a locking arrangement comprised in the vehicle door.

An advantage of some embodiments is that the at least one retractable step when connected to the vehicle door is secured by the locking arrangement to avoid the at least one retractable step to mistakenly be retracted.

In some embodiments, the locking arrangement comprises an electronically controlled plunger arranged to lock at least one latch of the at least one retractable step protruded into the vehicle door.

An advantage of some embodiments is that the electronically controlled plunger may automatically lock the at least one latch.

An advantage of some embodiments is that the electronically controlled plunger may be remotely controlled to lock the at least one latch.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1a is a schematic drawing illustrating an example system according to some embodiments;
Figure 1b is a schematic drawing illustrating an example system according to some embodiments;
Figure 2a is a schematic drawing illustrating an example connection according to some embodiments;
Figure 2b is a schematic drawing illustrating an example connection according to some embodiments;
Figure 2c is a schematic drawing illustrating an example component according to some embodiments;
Figure 2d is a schematic drawing illustrating an example component according to some embodiments;
Figure 2e is a schematic drawing illustrating an example component according to some embodiments;
Figure 3a is a schematic drawing illustrating example components according to some embodiments;
Figure 3b is a schematic drawing illustrating example components according to some embodiments;
Figure 3c is a schematic drawing illustrating example components according to some embodiments;
Figures 4a-b are schematic drawings illustrating example components according to some embodiments;
Figures 5a-c are schematic drawings illustrating example components that do not correspond to the invention;
Figures 6a-c are schematic drawings illustrating example components that do not correspond to the invention;
Figure 7 is a flowchart illustrating example method steps according to some embodiments;
Figure 8 is a schematic block diagram illustrating an example apparatus according to some embodiments; and
Figure 9 is a schematic drawing illustrating an example computer readable medium according to some embodiments.

### DETAILED DESCRIPTION

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

In the following, embodiments will be presented where alternative approaches for providing assistance when entering or exiting a vehicle are described.

Retractable steps, as described herein, typically comprise steps configured to be extended, i.e., deployed, and retracted, i.e., withdrawn, wherein the retractable steps in the extended state are deployed to form climbing steps for providing assistance when climbing in and/or out of a vehicle, and in the retracted state are withdrawn and integrated in the vehicle.

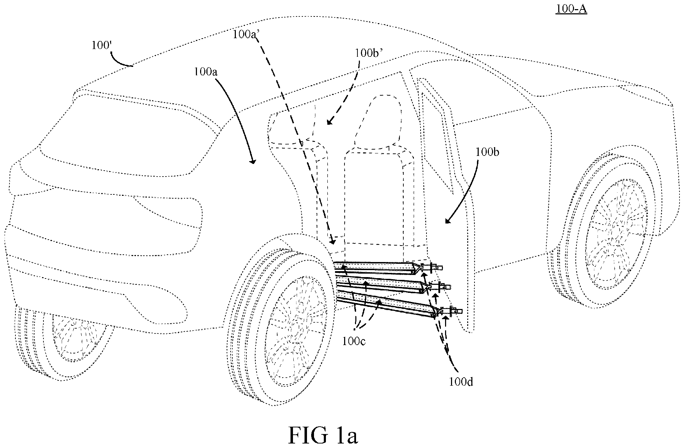

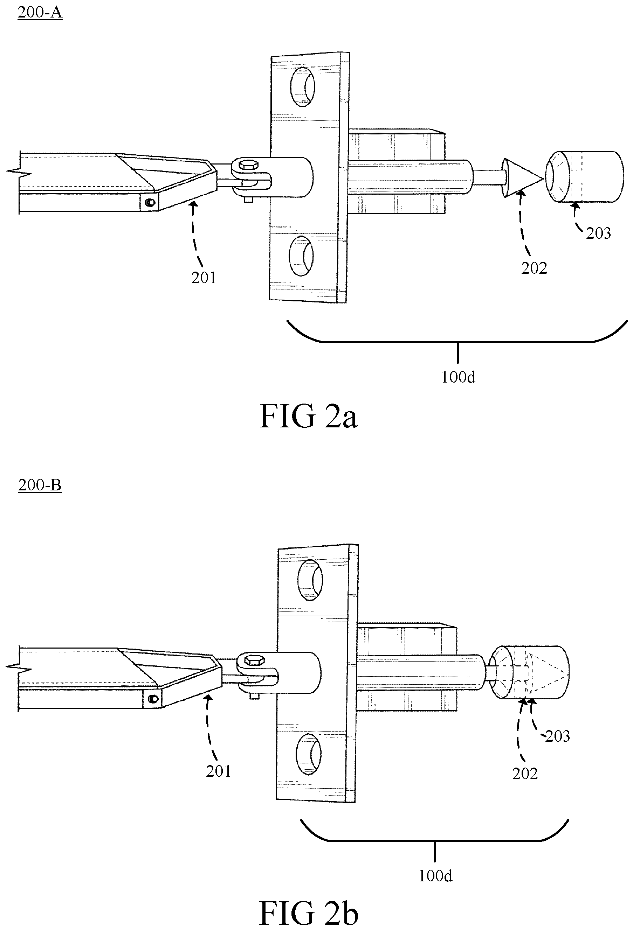

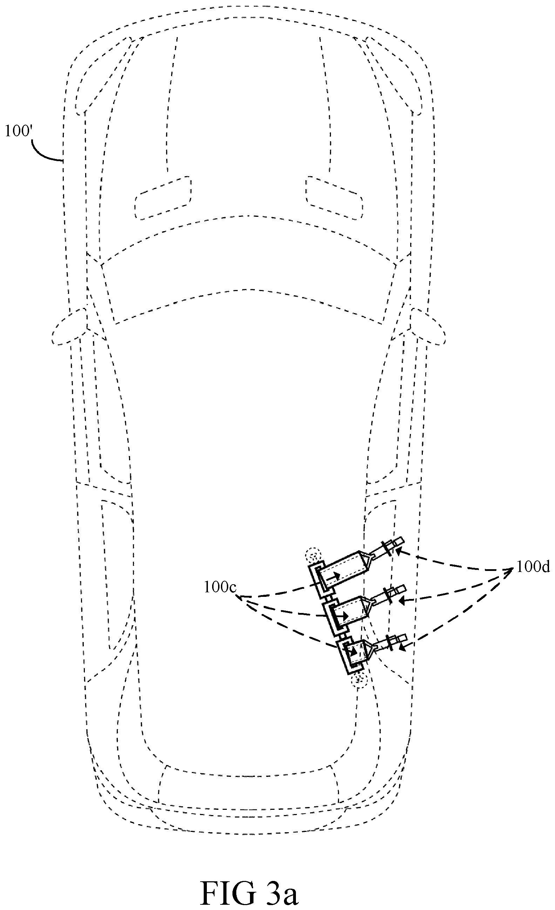

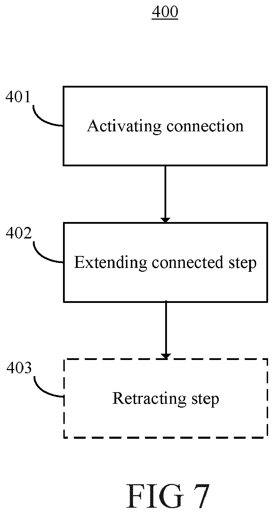

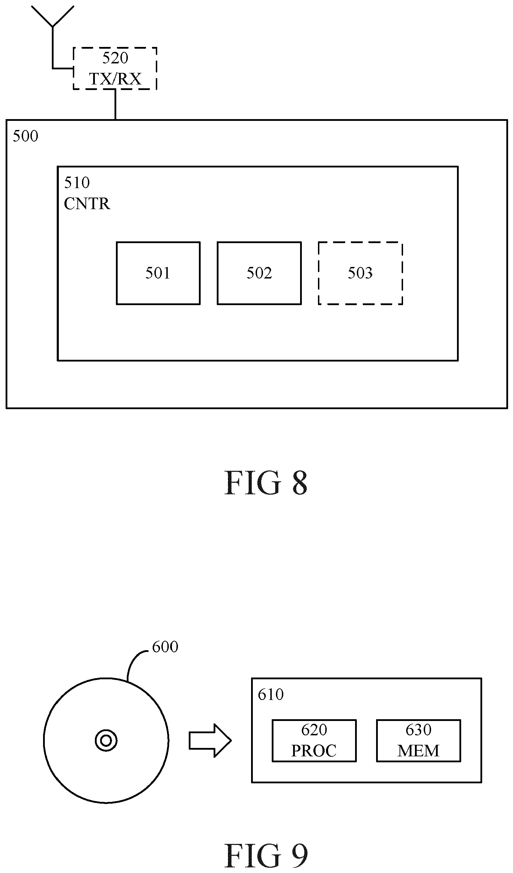

Figures 1a-b are schematic drawings illustrating components (further illustrated in figures 2a-e and figures 3a-c) of example systems 100-A, 100-B according to some embodiments. The systems 100-A, 100-B are for a vehicle. Thus, the systems 100-A, 100-B may, for example, comprise the components of figures 2a-e and figures 3a-c and/or the apparatus 500 and/or the controller 510 of figure 8 and be configured to perform one or more of the method steps of figure 7 and/or one or more of any steps otherwise described herein; all of which will be described later herein.

Figures 1a-b illustrate the systems 100-A, 100-B for a vehicle 100' as well as components further illustrated in figures 2a-e and figures 3a-c.

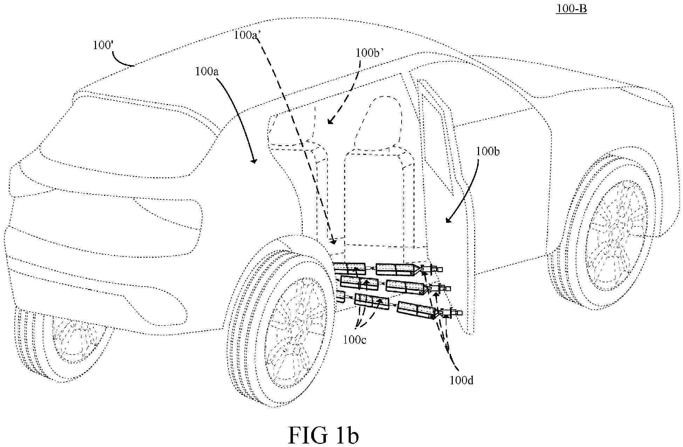

Figures 1a-b further illustrate the vehicle 100' comprising a vehicle body 100a, a vehicle door 100b in an open position, and three retractable steps 100c (illustrated as belts in figure 1a and plates or solid plates connected to each other via pivot connections in figure 1b) in an extended state connected to the vehicle door 100b and the vehicle body 100a.

The vehicle body 100a encloses a passenger compartment and defines a vehicle door opening 100b', wherein the vehicle door 100b is moveable relative to the vehicle door opening 100b' between a closed position and an open position.

The retractable steps 100c are connected to the vehicle door 100b and to the vehicle body 100a and are extendable by movement of the vehicle door 100b in a direction from the closed position towards the open position.

For example, when opening the vehicle door 100b from the closed position, the retractable steps being connected to the vehicle door 100b, the retractable steps 100c are extended by the opening (i.e. opening movement) of the vehicle door 100b.

Optionally, in some embodiments, the connected retractable steps 100c are retractable by movement of the vehicle door 100b in a direction from an open position towards the closed position.

For example, when closing the vehicle door 100b from an open position, the retractable steps being connected to the vehicle door 100b, the retractable steps 100c are retracted by the closing (i.e., closing movement) of the vehicle door 100b.

Alternatively, in some embodiments, the connected retractable steps 100c may be retracted by firstly releasing the connection of the retractable steps 100c to the vehicle door 100b by a release mechanism, and secondly urging the retractable steps 100c, e.g. by a spring function or manually, to its retracted state, i.e. to its rest position. The releasing of the connection of the retractable steps 100c to the vehicle door 100b and/or the urging of the retractable steps 100c to its rest position may be triggered by a user control, e.g., a user may control the retractable steps 100c accordingly through a release/retract function in the Human Machine Interface (HMI) of the vehicle 100', in a key fob, or in an app.

Alternatively or additionally, the opening and/or the closing movements of the vehicle door 100b may be controlled remotely by a suitable control device and possibly be opened/closed automatically, and thereby the retractable steps 100c may also be extended/retracted automatically by the remotely controlled movement of the vehicle door 100b assuming that the retractable steps 100c are connected to the vehicle door 100b.

In some embodiments, the retractable steps 100c are connected to the vehicle door 100b and a vehicle structure 100a' enclosed in the vehicle body 100a and/or in the passenger compartment.

In some embodiments, the vehicle structure 100a' comprises a seat and/or a structural body part of the vehicle 100'.

For example, the retractable steps 100c may be connected to the vehicle door 100b and a seat in the passenger compartment of the vehicle 100'.

For example, the retractable steps 100c may be connected to the vehicle door 100b and a part of the body, e.g. a body on a pillar or on side sills, of the vehicle 100'.

Alternatively or additionally, a first one of the retractable steps 100c may be connected to the vehicle door 100b and a seat, a second one of the retractable steps 100c may be connected to the vehicle door 100b and body of a pillar of the vehicle 100', and a third one of the retractable steps 100c may be connected to the vehicle door 100b and body of side sills of the vehicle 100'.

According to the invention, the retractable steps 100c comprise one or more of belts (as illustrated in figure 1a) or solid plates (as illustrated in figure 1b).

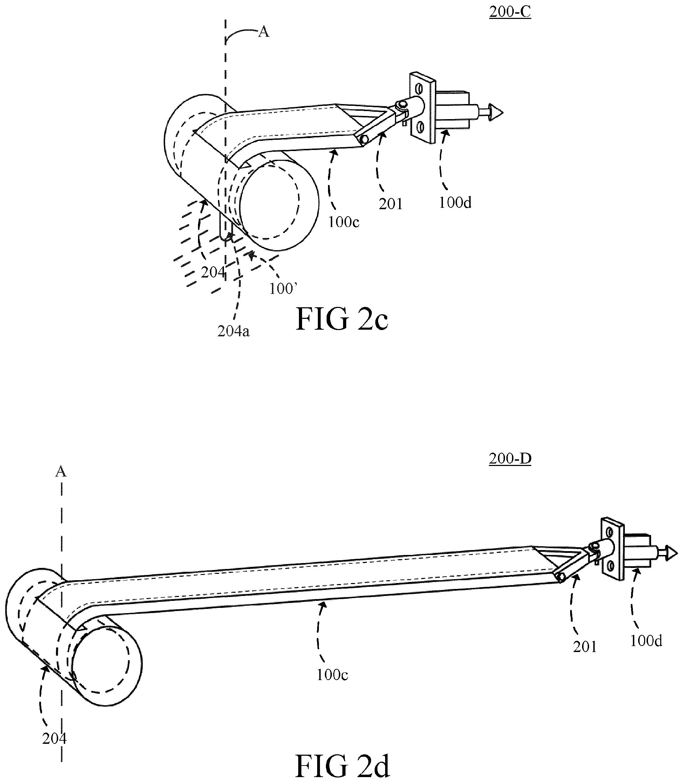

For example, the retractable steps 100c may comprise belts, wherein each belt may be rolled up on a roller in a vehicle structure 100a', e.g., body of the vehicle, when retracted (reference to figures 2c and 3a).

For example, as illustrated in figure 1b, the retractable steps 100c may comprise solid plates, wherein plates are especially advantageous as the plates are hard enough to hold the vehicle door 100b open in the extended state, while when in the retracted state, the plates may be slid into and/or under a vehicle structure 100a', e.g. a seat.

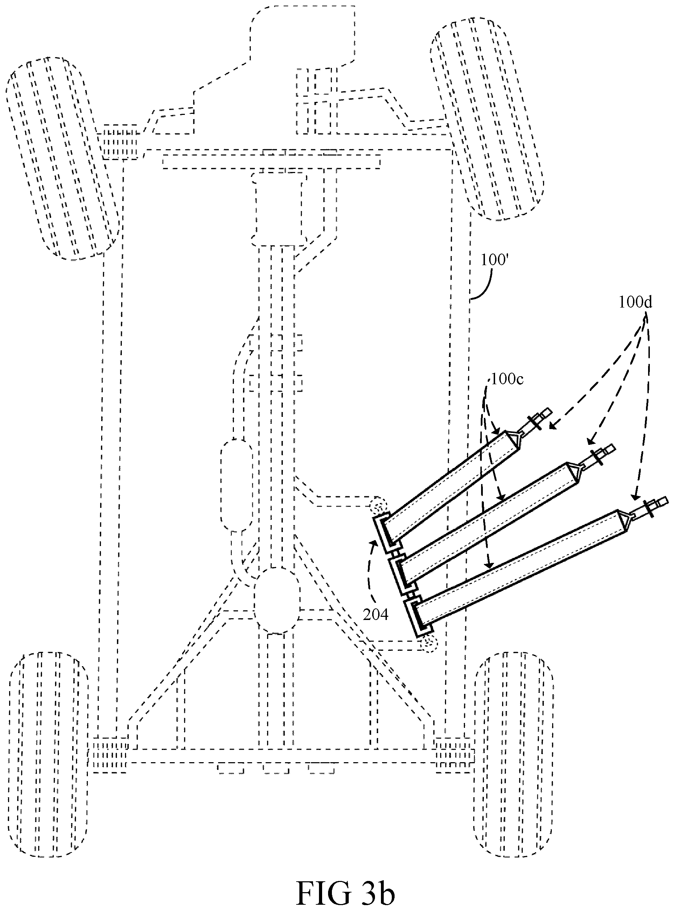

According to the invention, the retractable steps 100c form climbing steps for climbing in and/or out of the passenger compartment (as illustrated in figures 1a-b and figures 3b-c).

In some embodiments, the retractable steps 100c may comprise one or more climbing steps depending on the height of the vehicle 100'.

According to the invention, the vehicle door 100b comprises a detent mechanism for controlling a required force to close the vehicle door 100b connected with the retractable steps 100c when being in the open position.

According to the invention, the detent mechanism holding the vehicle door 100b open may be configured to be controllably hard so that the vehicle door 100b will take more force to close when the retractable steps 100c are deployed.

In some embodiments, the systems 100-A, 100-B are enabled by a user of the vehicle 100'.

For example, the user may activate the systems 100-A, 100-B through settings in the HMI, or in an app, or by setting the child lock active on the vehicle door 100b.

For example, when the user activates the systems 100-A, 100-B, a plunger will descend and connect (as illustrated in figures 2a-b) the retractable steps 100c to the vehicle door 100b and when the user opens the vehicle door 100b, the retractable steps 100c will extend by the opening movement in a space between the vehicle door 100b and the vehicle body 100a.

Hence, when the systems 100-A, 100-B are not activated and the retractable steps are not connected to the vehicle door 100b, the retractable steps 100c will remain in the vehicle body 100a' in its retracted state as the door opens, i.e., in its rest position (as illustrated in figure 3a).

In some embodiments, a vehicle 100' comprises the system 100-A or 100-B.

Figure 2a-b are schematic drawings illustrating an example connection according to some embodiments. More specifically, Figure 2a illustrates a connection arrangement 200-A in an unlocked state and figure 2b illustrates a connection arrangement 200-B in a locked state for connecting and locking the retractable step 100c to the vehicle door 100b.

The connection arrangement 200-A, 200-B comprises, in some embodiments, a locking arrangement 100d for locking the retractable step 100c to the vehicle door 100b, wherein the retractable step 100c is connected to the locking arrangement 100d with a pivot connection 201.

In some embodiments, the locking arrangement 100d comprises an electronically controlled plunger 202 arranged to be protruded into a latch housing 203.

For example, when the vehicle door 100b is in a closed position and at activation of the systems 100-A, 100-B, the plunger 202 is protruded into the latch housing 203 and locked (as illustrated in figures 2a-b) so that the retractable step 100c is connected and locked to the vehicle door 100b.

Alternatively or additionally, the locking arrangement 100d may lock the retractable step when the vehicle door 100b is in an open position by manually extending (e.g., by a user of the systems 100-A, 100-B) the retractable step 100c to connect and be locked with the vehicle door 100b via the locking arrangement 100d.

Figure 2c is a schematic drawing illustrating an example component 200-C according to some embodiments. More specifically, figure 2c illustrates a retractable step 100c comprising a belt in a retracted state, wherein the retractable step 100c is configured to be connected to a locking arrangement 100d with a locking mechanism (not shown) via a pivot connection 201 (reference to Figures 2a-b) . The pivot connection 201 is allowing an angular displacement of the example component 200-C during displacement of the vehicle door 100b for extending or retracting the retractable step 100c.

Figure 2c further illustrates a roller 204 suitable for rolling up or maintaining the belt 100c in a rest position when not connected to the locking arrangement 100d and the vehicle door 100b.

Figure 2d is a schematic drawing illustrating an example component 200-D according to some embodiments. More specifically, figure 2d illustrates a retractable step 100c comprising a belt in an extended state, wherein the retractable step 100c is configured to be connected to a locking arrangement 100d with a locking mechanism (not shown) via a pivot connection 201 (reference to figures 2a-b). The pivot connection 201 is allowing an angular displacement of the example component 200-D during displacement of the vehicle door 100b for extending or retracting the retractable step 100c.

Figure 2d further illustrates a roller 204 suitable for rolling out the belt 100c when connected to the locking arrangement 100d and the vehicle door 100b.

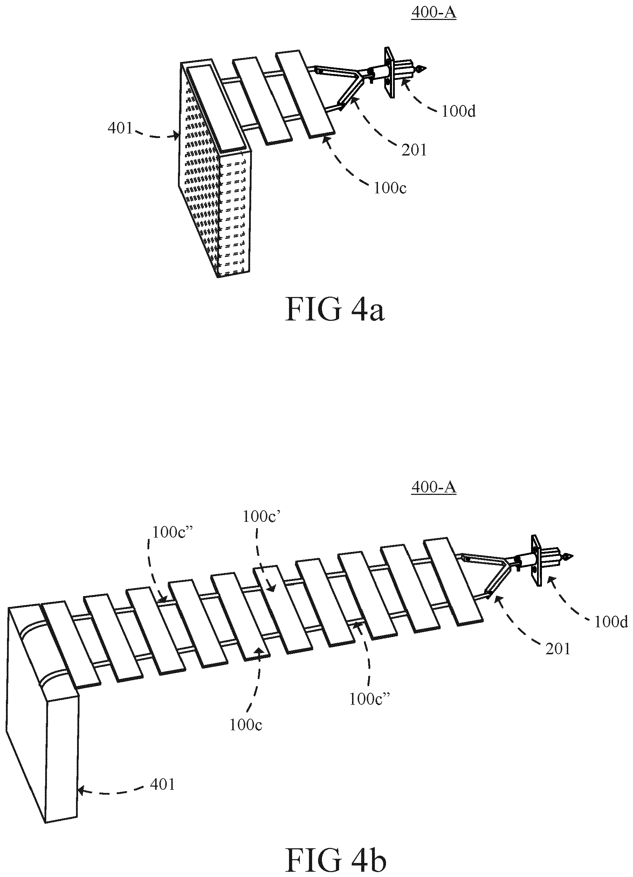

More specifically, figures 4a-b illustrate a retractable step 100c comprising a plurality of rigid step elements 100c' attached to a wire structure 100c". In this embodiment, the retractable step 100c is having a blind-like configuration that is easily extended and retracted, and the step elements 100c' are arranged after each other on the wire structure 100c". Each step element 100c' is suitably arranged as a solid plate with an elongated configuration, as shown in figures 4a-b.

Figures 2c-d further illustrates that the roller 204 suitably is pivotally connected to the body of the vehicle 100', allowing a pivoting movement of the roller 204 in relation to the body when extending and retracting the retractable step 100c during opening or closing of the vehicle door 100b. As schematically illustrated in figure 2c, the roller 204 is connected to the body of the vehicle 100' via a pivoting element 204a, such as a hinge structure, a pivoting shaft, or similar arrangement. The pivoting element 204a may in an alternatively non-illustrated embodiment be connected to a frame structure to which the roller 204 is connected. In this way, the roller 204 can pivot around a pivoting axis A during opening and closing of the vehicle door 100b. The pivoting movement of the roller 204 is allowing an angular displacement of the example component 200-C, 200-D during displacement of the vehicle door 100b when extending and retracting the retractable step 100c. Two or more rollers 204 may be connected to each other and arranged to pivot around a common pivoting axis, or alternatively each roller 204 is pivotally connected to the body of the vehicle 100'. A similar pivoting solution may also be used for the other embodiments described.

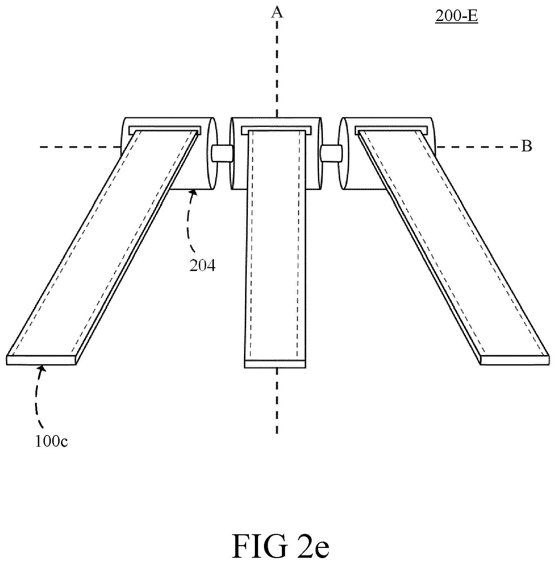

Figure 2e is a schematic drawing illustrating an example component 200-E according to some embodiments. More specifically, figure 2e illustrates retractable steps 100c comprising belts in an extended state, wherein the rollers 204 have rolled out the belts 100c.

Figure 2e further illustrates each roller 204 as pivotable rollers being arranged so that the belts 100c may be rolled out and up perpendicular to a roller axis B of the rollers 204 when the vehicle door 100b is opened and closed. The roller assembly illustrated in figure 2e may further be arranged to pivot around a pivoting axis A in relation to the body of the vehicle 100', in a similar way as described above in connection to figure 2c.

Figure 3a is a schematic drawing illustrating example components according to some embodiments. More specifically, figure 3a illustrates the retractable steps 100c being embedded in the vehicle body 100a' in its retracted state, i.e., in its rest position.

Figure 3a further illustrates the locking arrangements 100d being embedded in the vehicle door 100b.

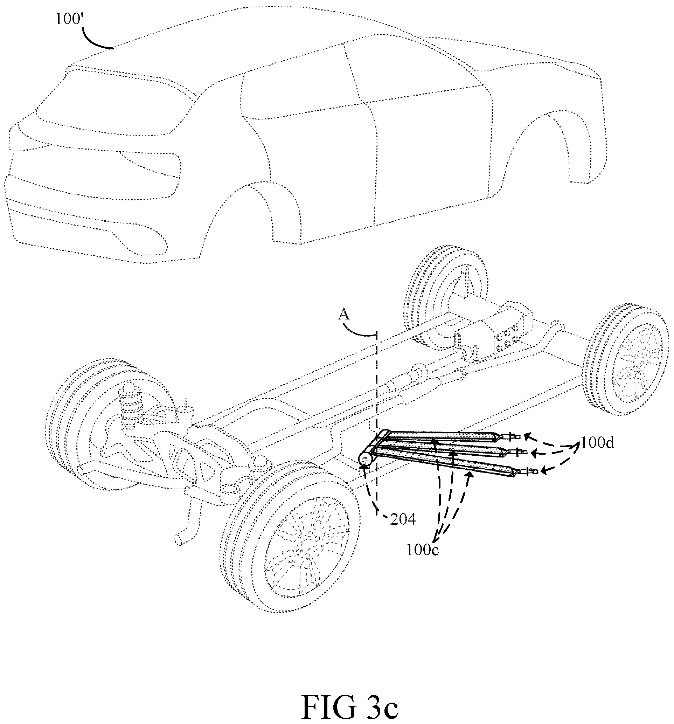

Figures 3b-c are schematic drawings illustrating example components according to some embodiments. More specifically, figures 3b-c illustrate, from different views, the rollers 204 being embedded in the vehicle body 100a' and the retractable steps 100c in its extended state, wherein the retractable steps 100c are connected and locked to the locking arrangements 100d being embedded in the vehicle door 100b. As schematically shown in figure 3c, the rollers 204 are suitably pivotally arranged in relation to the body of the vehicle 100', and are with this configuration allowed to pivot around a common pivoting axis A, in a similar way as described in connection to figure 2c.

Figures 3b-c further illustrate the extended retractable steps 100c forming climbing steps as described above.

Figures 3b-c furthermore illustrate the retractable steps 100c as belts, wherein each belt may be rolled up on the roller 204 (reference to figure 2d) in the vehicle structure 100a', e.g., body of the vehicle, when retracted.

Figures 4a-b are schematic drawings illustrating an example system 400-A according to some embodiments. The system 400-A may, for example, comprise the apparatus 500 and/or the controller 510 of figure 8 and be configured to perform one or more of the method steps of figure 7 and/or one or more of any steps otherwise described herein. The system 400-A is arranged in a vehicle 100', as described above. More specifically, figures 4a-b illustrate a retractable step 100c comprising a plurality of rigid step elements 100c' attached to a wire structure 100c". In this embodiment, the retractable step 100c is having a blind-like configuration that is easily extended and retracted, and the step elements 100c' are arranged after each other on the wire structure 100c". Each step element 100c' is suitably arranged as a solid plate with an elongated configuration, as shown in figures 4a-b. In the retraced position shown in figure 4a, the retractable step 100c is stored in a storage container 401, from which the retractable step 100c can be extended from the retracted state when opening the vehicle door 100b. The extended state is schematically shown in figure 4b. The storage container 401 is suitably connected to the body of the vehicle 100'. The retractable step 100c may for example be connected to a non-illustrated spring arrangement or similar device for stacking or piling up the step elements 100c' on top of each other in the storage container 401, as shown in figure 4a, when closing the vehicle door 100b. In a similar way as described above in connection to figure 2c, the retractable step 100c is configured to be connected to a locking arrangement 100d with a locking mechanism (not shown) via a pivot connection 201. The storage container 401 is suitable for maintaining the belt 100c in a rest position when not connected to the locking arrangement 100d and the vehicle door 100b. The storage container 401 may further be arranged with a stopping mechanism or similar device that is preventing further extension of the retractable step 100c when the vehicle door 100b is held in a non-fully open door position, for a safe functionality of the retractable step 100c.

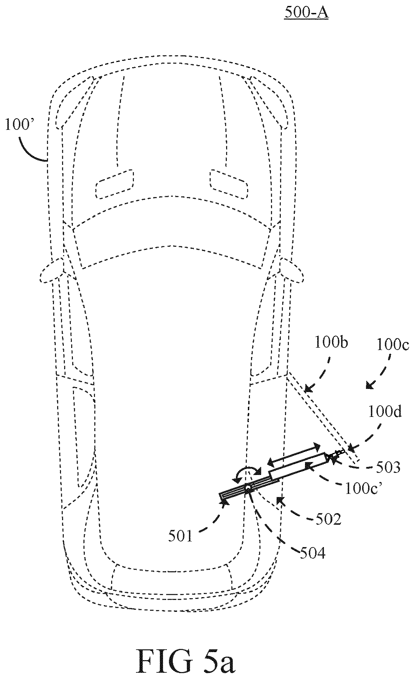

Figures 5a-c are schematic drawings illustrating an example system 500-A that does not correspond to the invention. The system 500-A may, for example, comprise the apparatus 500 and/or the controller 510 of figure 8 and be configured to perform one or more of the method steps of figure 7 and/or one or more of any steps otherwise described herein. The system 500-A is arranged in a vehicle 100', as shown in the figures. More specifically, figures 5a-c illustrate a retractable step 100c comprising a step element 100c' attached in one end to the vehicle door 100b. The step element 100c' is suitably arranged as a solid plate that is rigid in construction with an elongated flat shape. The step element 100c' is further slidingly connected to a track structure 501, which track structure 501 in turn is pivotally connected to a structural element of the body of the vehicle 100', such as a door sill structure 502. With this configuration, the step element 100c' is allowed to slide in relation to the track structure 501 when opening or closing the vehicle door 100b. During movement of the vehicle door 100b, the step element 100c' is pivoting in relation to the vehicle door 100b and the track structure 501 is pivoting in relation to the door sill structure 502, allowing the retractable step 100c to be extended or retracted.

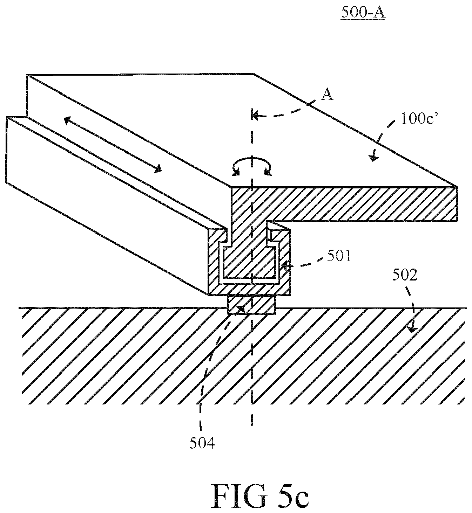

The step element 100c' in the embodiment illustrated in figures 5a-c is pivotally connected to the vehicle door 100b via a first pivot connection 503. The first pivot connection 503 may be of any suitable construction such as a hinge mechanism or a pivot shaft mechanism, allowing a pivoting movement between the vehicle door 100b and the step element 100c'. The step element 100c' is further slidingly connected to the track structure 501, and the track structure 501 is pivotally connected to the door sill structure 502 via a second pivot connection 504. The second pivot connection 504 may be of any suitable construction such as for example a hinge mechanism or a pivot shaft mechanism, as schematically indicated in figure 5c, where the mechanism is allowing a pivoting movement of the track structure 501 in relation to the door sill structure 502. The step element 100c' is allowed to slide in relation to the track structure 501, when the vehicle door 100b is opened or closed. In this embodiment, the track structure 501 may for example be designed with an inverted U-shape cross-sectional configuration, as shown in figure 5c, where the second pivot connection 504 is allowing a rotational movement of the track structure 501 in relation to the door sill structure 502. The step element 100c' may have an L-shaped cross-sectional configuration as shown in figure 5c, where a side structure of the step element 100c' is slidingly arranged in the track structure 501. The step element 101c' may alternatively have a T-shaped cross-sectional configuration (not shown). It should be understood that the second pivot connection 504 may be connected to any suitable vehicle structure.

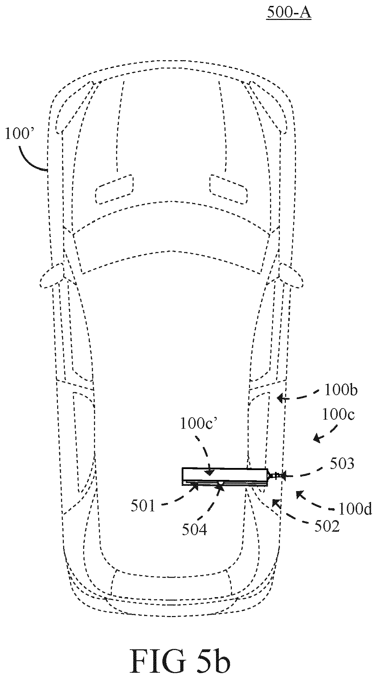

The retracted state of the retractable step 100c is shown in figure 5b, where the step element 100c' is hidden in the door sill structure 502 when the vehicle door 100b is in the closed position. The extended state of the retractable step 100c is shown in figure 5a, where the step element 100c' is extended out from the door sill structure 502 when the vehicle door 100b is in the open position. When moving between the retracted position shown in figure 5b and the extended position shown in figure 5a, the step element 100c' is during the door opening or closing movements allowed to pivot in relation to the vehicle door 100b via the first pivot connection 503, and slide in relation to the track structure 501. During the sliding movement of the step element 100c' in relation to the track structure 501, the track structure 501 is pivoting around the second pivot connection 504 for a positioning of the track structure 501 adapted to the opening curvature of the vehicle door 100b, as understood from figures 5a and 5b. As shown in figure 5c, the track structure 501 is configured for pivoting around a pivoting axis A via the second pivot connection 504. In a similar way as described above in connection to figure 2c, the retractable step 100c is suitably configured to be connected to the vehicle door 100b via a locking arrangement 100d with a locking mechanism (not shown).

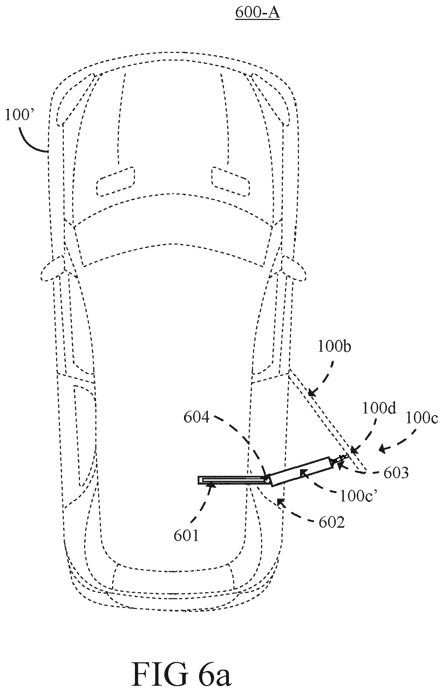

Figures 6a-c are schematic drawings illustrating an example system 600-A that does not correspond to the invention. The system 600-A may, for example, comprise the apparatus 500 and/or the controller 510 of figure 8 and be configured to perform one or more of the method steps of figure 7 and/or one or more of any steps otherwise described herein. The system 600-A is arranged in a vehicle 100', as shown in the figures. More specifically, figures 6a-c illustrate a retractable step 100c comprising a step element 100c' attached in one end to the vehicle door 100b. The step element 100c' is suitably arranged as a solid plate that is rigid in construction with an elongated flat shape. The step element 100c' is further slidingly and pivotally connected to a track structure 601, which track structure 601 in turn is fixedly connected to a structural element of the body of the vehicle 100', such as a door sill structure 602. With this configuration, the step element 100c' is allowed to slide in relation to the track structure 601 when opening or closing the vehicle door 100b. During movement of the vehicle door 100b, the step element 100c' is pivoting both in relation to the vehicle door 100b and the track structure 601, allowing the retractable step 100c to be extended or retracted.

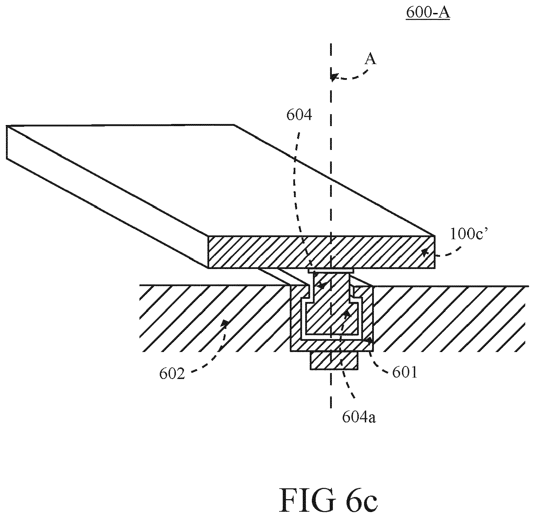

The step element 100c' in the embodiment illustrated in figures 6a-c is in one end pivotally connected to the vehicle door 100b via a first pivot connection 603. The first pivot connection 603 may be of any suitable construction such as a hinge mechanism or a pivot shaft mechanism, allowing a pivoting movement between the vehicle door 100b and the step element 100c'. The step element 100c' is in an opposite end further pivotally connected to the track structure 601 via a second pivot connection 604. The second pivot connection 604 is allowed to slide in relation to the track structure 601, when the vehicle door 100b is opened or closed. The second pivot connection 604 may be of any suitable construction such as for example a hinge mechanism or a pivot shaft mechanism, where the mechanism is allowing both a pivoting and sliding movement of the step element 100c' in relation to the track structure 601. In this embodiment, the track structure 601 may for example be designed with an inverted U-shape cross-sectional configuration, as shown in figure 6c, where the second pivot connection 604 can slide in relation to the track structure 601. The second pivot connection 604 is suitably arranged with a projecting element 604a that is sliding in relation to the track structure 601, and the projecting element 604a may have a circular shape allowing a pivotal movement in relation to the track structure 601.

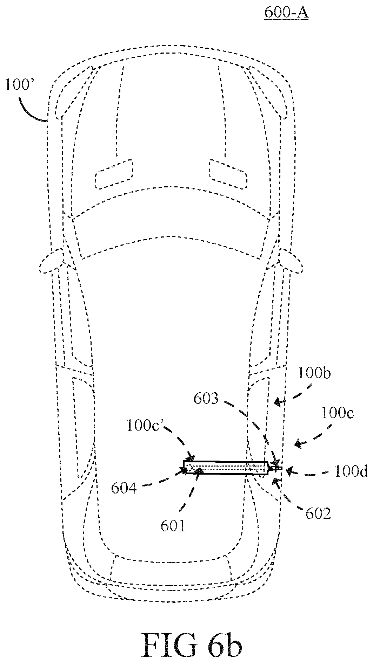

The retracted state of the retractable step 100c is shown in figure 6b, where the step element 100c' is hidden in the door sill structure 601 when the vehicle door 100b is in the closed position. The extended state of the retractable step 100c is shown in figure 6a, where the step element 100c' is extended out from the door sill structure 601 when the vehicle door 100b is in the open position. When moving between the retracted position shown in figure 6b and the extended position shown in figure 6a, the step element 100c' is during the door opening or closing movements allowed to pivot in relation to the vehicle door 100b, and pivot and slide in relation to the track structure 601 via the respective pivot connections 603, 604. As shown in figure 6c, the step element 100c' is configured for pivoting around a pivoting axis A via the second pivot connection 604. In a similar way as described above in connection to figure 2c, the retractable step 100c is suitably configured to be connected to the vehicle door 100b via a locking arrangement 100d with a locking mechanism (not shown).

Instead of a straight configuration of the step element 100c', as illustrated in figures 5a-b and 6a-b, the step element 100c' may have a curved configuration. In another embodiment (not shown), the curved configuration of the step element 100c' is adapted to the opening curvature of the vehicle door 100b. With this configuration, one or both pivot connections may be omitted. The curved step element 100c' may for example be arranged to slide in relation to the door sill structure via an opening or similar arrangement in the door sill structure, or alternatively slide in a corresponding curved track structure.

Figure 7 is a flowchart illustrating method steps of an example method 400 according to some embodiments. The method 400 is for a vehicle. Thus, the method 400 may, for example, in the system 100-A of figure 1a and/or in the system 100-B of figure 1b and be performed by components of figures 2a-e, 3a-c, 4a-b, 5a-c, 6a-c and/or the apparatus 500 and/or the controller 510 of figure 8; all of which will be described later herein.

The vehicle for which method 400 is suitable for may be the vehicle 100', as illustrated in the system 100-A of figure 1a, 100-B of figure 1b, 500-A of figures 5a-c, and/or 600-A of figures 6a-c.

The vehicle 100' comprising a vehicle body 100a, a vehicle door 100b, and retractable steps 100c, wherein the vehicle body 100a encloses a passenger compartment and defines a vehicle door opening 100b', and wherein the vehicle door 100b is moveable relative to the vehicle door opening 100b' between a closed position and an open position.

The method 400 comprises the following steps.

In step 401, a connection of the at least one retractable step to the vehicle door and to the vehicle body is activated.

In some embodiments, the at least one retractable step is connected to the vehicle door and a vehicle structure enclosed in the vehicle body and/or in the passenger compartment.

In some embodiments, the at least one connected retractable step is locked to the vehicle door by a locking arrangement comprised in the vehicle door.

In some embodiments, the locking arrangement comprises an electronically controlled plunger arranged to lock at least one latch of the at least one retractable step protruded into the vehicle door.

In step 402, the at least one connected retractable step is extended by movement of the vehicle door in a direction from the closed position towards the open position.

In optional step 403, in some embodiments, the at least one connected retractable step is retracted by movement of the vehicle door in a direction from the open position towards the closed position.

In some embodiments, a required force is controlled to close the vehicle door when being in the open position by a detent mechanism comprised in the vehicle door.

Alternatively, in some embodiments, the at least one retractable step may be retracted by a release mechanism releasing the connection of the at least one retractable step to the vehicle door, and a retraction mechanism, e.g., a spring function, urging the at least one retractable step to its retracted state, i.e., to its rest position. The release mechanism and retraction mechanism may be controlled by a user, e.g., a user may control the at least one retractable step accordingly through a release/retract function in the Human Machine Interface (HMI), or in an app.

Alternatively or additionally, the opening and/or the closing movements of the vehicle door may be controlled remotely and possibly be opened/closed automatically, and thereby the at least one retractable step may also be extended/retracted automatically by the remotely controlled movement of the vehicle door assuming that the at least one retractable step is connected to the vehicle door.

In the different embodiments described, the step elements 100c' are made of a suitable material or combinations of suitable materials, such as for example plastic materials, reinforced plastic materials, composite materials, solid wood, wood laminates, aluminium, and other metals or metallic materials.

Figure 8 is a schematic block diagram illustrating an example apparatus 500 according to some embodiments. The apparatus 500 is for a vehicle. Thus, the apparatus 500 and/or the controller 510 may, for example, be configured to perform one or more of the method steps of figure 7 and/or one or more of any steps otherwise described herein in the systems 100-A of figure 1a, 100-B of figure 1b, 400-A of figures 4a-b, 500-A of figures 5a-c, and/or 600-A of figures 6a-c.

The vehicle for which apparatus 500 is suitable for may be the vehicle 100', as illustrated in the systems 100-A of figure 1a, 100-B of figure 1b, 500-A of figures 5a-c, and/or 600-A of figures 6a-c.

The vehicle 100' comprising a vehicle body 100a, a vehicle door 100b, and retractable steps 100c, wherein the vehicle body 100a encloses a passenger compartment and defines a vehicle door opening 100b', and wherein the vehicle door 100b is moveable relative to the vehicle door opening 100b' between a closed position and an open position.

The apparatus 500 comprises a controller 510, e.g. device controlling circuitry, configured to cause activation of a connection of the at least one retractable step to the vehicle door and to the vehicle body.

The controller 510 is further configured to cause extension of the at least one connected retractable step by remotely controlling movement of the vehicle door in a direction from the closed position towards the open position.

Optionally, in some embodiments, the controller 510 is furthermore configured to cause retraction of the at least one connected retractable step by remotely controlling movement of the vehicle door in a direction from the open position towards the closed position.

The apparatus 500 comprises, as mentioned above, the controller (CNTR; e.g., control circuitry or a controlling module) 510, which may in turn comprise, (or be otherwise associated with; e.g., connected or connectable to), a system activator 501, e.g. system activating circuitry or system activating module, configured to activate a system and a connection of the at least one retractable step to the vehicle door and to the vehicle body (compare with step 401 of figure 7).

In some embodiments, the at least one retractable step is connected to the vehicle door and a vehicle structure enclosed in the vehicle body and/or in the passenger compartment.

In some embodiments, the at least one connected retractable step is locked to the vehicle door by a locking arrangement comprised in the vehicle door.

In some embodiments, the locking arrangement comprises an electronically controlled plunger arranged to lock at least one latch of the at least one retractable step protruded into the vehicle door.

The controller 510 further comprises, (or is otherwise associated with; e.g., connected or connectable to), a door opener 502, e.g. door opening circuitry or door opening module, configured to remotely open a vehicle door causing extension of the at least one connected retractable step (compare with step 402 of figure 7).

Optionally, in some embodiments, the controller 510 may further comprise, (or be otherwise associated with; e.g., connected or connectable to), a door closer 503, e.g. door closing circuitry or door closing module, configured to remotely close a vehicle door causing retraction of the at least one connected retractable step (compare with step 403 of figure 7).

According to the invention, a required force is controlled to close the vehicle door when being in the open position by a detent mechanism comprised in the vehicle door.

In some embodiments, the apparatus 500 and/or the controller 510 is comprised completely or partially in the vehicle and/or remotely in a cloud environment.

In some embodiments, the apparatus 500 and/or the controller 510 is operably connectable to controlling circuitry in a vehicle and/or in a cloud environment.

The apparatus 500 may further optionally comprise, (or be otherwise associated with; e.g., connected or connectable to), in some embodiments, a transceiver TX/RX 520, e.g. transceiving circuitry or transceiving module, configured to transmit and receive radio signals, e.g., in accordance with remotely controlling a vehicle.

Generally, when an apparatus is referred to herein, it is to be understood as a physical product. The physical product may comprise one or more parts, such as controlling circuitry in the form of one or more controllers, one or more processors, or the like.

The described embodiments and their equivalents may be realized in software or hardware or a combination thereof. The embodiments may be performed by general purpose circuitry.

Examples of general purpose circuitry include digital signal processors (DSP), central processing units (CPU), Graphics Processing Units (GPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a wireless communication device.

Embodiments may appear within an electronic apparatus (such as a wireless communication device) comprising arrangements, circuitry, and/or logic according to any of the embodiments described herein. Alternatively or additionally, an electronic apparatus (such as a wireless communication device) may be configured to perform methods according to any of the embodiments described herein.

According to some embodiments, a computer program product comprises a computer readable medium such as, for example a universal serial bus (USB) memory, a plug-in card, an embedded drive or a read only memory (ROM).

Figure 9 illustrates an example computer readable medium in the form of a compact disc (CD) ROM 600. The computer readable medium has stored thereon a computer program comprising program instructions. The computer program is loadable into a data processor (PROC) 620, which may, for example, be comprised in a wireless communication device 610. When loaded into the data processor, the computer program may be stored in a memory (MEM) 630 associated with or comprised in the data processor.

In some embodiments, the computer program may, when loaded into and run by the data processing unit, cause execution of steps according to, for example, figure 7 and/or one or more of any steps otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

## Claims

1. A system (100-A, 100-B, 400-A) for a vehicle (100'), said system (100-A, 100-B, 400-A) comprising a vehicle body (100a), a vehicle door (100b) and at least one retractable step (100c), wherein the vehicle body (100a) encloses a passenger compartment and defines a vehicle door opening (100b') and wherein the vehicle door (100b) is moveable relative to the vehicle door opening (100b') between a closed position and an open position,
wherein the at least one retractable step (100c) is connected to the vehicle door (100b) and to the vehicle body (100a), and wherein the at least one connected retractable step (100c) is extendable from a retracted state by movement of the vehicle door (100b) in a direction from the closed position towards the open position, wherein the at least one retractable step (100c) in an extended state forms a climbing step for climbing in and/or out of the passenger compartment, wherein the at least one retractable step is arranged as a belt or arranged as connected solid plates, wherein the at least one retractable step (100c) is attached in one end to the vehicle door (100b) and wherein the at least one retractable step (100c) is adapted to be in a rest position in the vehicle body (100a) in the retracted state,
**characterized in that** the belt is rolled up on a roller (204) in the vehicle body in the retracted state, or wherein the connected solid plates are stacked on top of each other in a storage container (401) connected to the vehicle body in the retracted state,
**in that** the vehicle door (100b) comprises a detent mechanism configured for controlling a required force to close the vehicle door (100b) connected with the at least one retractable step (100c) when being in the open position, wherein the detent mechanism holding the vehicle door (100b) in the open position is configured to be controllably hard so that the vehicle door (100b) will take more force to close when the at least one retractable step (100c) is deployed in the extended state.

2. The system according to claim 1, wherein the at least one connected retractable step (100c) is retractable by movement of the vehicle door (100b) in a direction from the open position towards the closed position.

3. The system according to any of claims 1-2, wherein the at least one retractable step (100c) is connected to the vehicle door (100b) and a vehicle structure (100a') enclosed in the vehicle body (100a) and/or in the passenger compartment.

4. The system according to any of claims 1-3, wherein the vehicle door (100b) comprises a locking arrangement (100d) configured for arranging the at least one connected retractable step (100c) in locking engagement to the vehicle door (100b).

5. The system according to claim 4, wherein the locking arrangement (100d) comprises an electronically controlled plunger arranged to lock at least one latch of the at least one retractable step (100c) protruded into the vehicle door (100b).

6. The system according to any of claims 1-5, wherein the system (100-A, 100-B) is enabled by a user through settings in the vehicle or by activating a child lock on the vehicle door (100b).

7. A vehicle (100') comprising the system (100-A, 100-B, 400-A) according to any one of claims 1-6.

8. A method for a vehicle (100') comprising the system (100-A, 100-B, 400-A) according to any one of claims 1-6; wherein the system comprises a vehicle body (100a), a vehicle door (100b) and at least one retractable step (100c), wherein the vehicle body (100a) encloses a passenger compartment and defines a vehicle door opening (100b') and wherein the vehicle door (100b) is moveable relative to the vehicle door opening between a closed position and an open position, the method comprising:
activating (201) a connection of the at least one retractable step (100c) to the vehicle door (100b) and to the vehicle body (100a),
extending (202) the at least one connected retractable step (100c) by movement of the vehicle door (100b) in a direction from the closed position towards the open position, controlling a required force to close the vehicle door (100b) when being in the open position by the detent mechanism comprised in the vehicle door (100b).

9. The method according to claim 8, further comprising the step of:
retracting (203) the at least one connected retractable step (100c) by movement of the vehicle door (100b) in a direction from the open position towards the closed position.

10. The method according to any of claims 8-9, wherein the at least one retractable step (100c) is connected to the vehicle door (100b) and a vehicle structure (100a') enclosed in the vehicle body (100a) and/or in the passenger compartment.

11. The method according to any of claims 8-10, further comprising locking the at least one connected retractable step (100c) to the vehicle door (100b) by a locking arrangement (100d) comprised in the vehicle door (100b).

12. The method according to claim 11, wherein the locking arrangement (100d) comprises an electronically controlled plunger arranged to lock at least one latch of the at least one retractable step (100c) protruded into the vehicle door (100b).

## Patentansprüche

1. System (100-A, 100-B, 400-A) für ein Fahrzeug (100'), wobei das System (100-A, 100-B, 400-A) eine Fahrzeugkarosserie (100a), eine Fahrzeugtür (100b) und mindestens eine einziehbare Stufe (100c) umfasst, wobei die Fahrzeugkarosserie (100a) eine Fahrgastzelle umschließt und eine Fahrzeugtüröffnung (100b') definiert und wobei die Fahrzeugtür (100b) relativ zu der Fahrzeugtüröffnung (100b') zwischen einer geschlossenen Position und einer offenen Position bewegbar ist,
wobei die mindestens eine einziehbare Stufe (100c) mit der Fahrzeugtür (100b) und der Fahrzeugkarosserie (100a) verbunden ist und wobei die mindestens eine verbundene einziehbare Stufe (100c) aus einem eingezogenen Zustand durch Bewegung der Fahrzeugtür (100b) in eine Richtung von der geschlossenen Position zu der offenen Position ausziehbar ist, wobei die mindestens eine einziehbare Stufe (100c) in einem ausgezogenen Zustand eine Steigstufe zum Einsteigen in die und/oder Austeigen aus der Fahrgastzelle bildet, wobei die mindestens eine einziehbare Stufe als ein Band angeordnet ist oder als verbundene feste Platten angeordnet ist, wobei die mindestens eine einziehbare Stufe (100c) an einem Ende mit der Fahrzeugtür (100b) verbunden ist und wobei die mindestens eine einziehbare Stufe (100c) dazu angepasst ist, in dem eingezogenen Zustand in einer Ruheposition in der Fahrzeugkarosserie (100a) zu sein,
**dadurch gekennzeichnet, dass** das Band in dem eingezogenen Zustand auf einer Rolle (204) in der Fahrzeugkarosserie aufgerollt ist, oder wobei die verbundenen festen Platten in dem eingezogenen Zustand in einem Lagerbehälter (401), der mit der Fahrzeugkarosserie verbundenen ist, aufeinandergestapelt sind,
dass die Fahrzeugtür (100b) einen Rastmechanismus umfasst, der zum Steuern einer erforderlichen Kraft zum Schließen der Fahrzeugtür (100b), die mit der mindestens einen einziehbaren Stufe (100c) verbunden ist, konfiguriert ist, wenn sie sich in der offenen Position befindet, wobei der Rastmechanismus, der die Fahrzeugtür (100b) in der offenen Position hält, dazu konfiguriert ist, steuerbar schwergängig zu sein, so dass die Fahrzeugtür (100b) mehr Kraft zum Schließen benötigt, wenn die mindestens eine einziehbare Stufe (100c) in dem ausgezogenen Zustand eingesetzt ist.

2. System nach Anspruch 1, wobei die mindestens eine verbundene einziehbare Stufe (100c) durch Bewegung der Fahrzeugtür (100b) in eine Richtung von der offenen Position zu der geschlossenen Position einziehbar ist.

3. System nach einem der Ansprüche 1-2, wobei die mindestens eine einziehbare Stufe (100c) mit der Fahrzeugtür (100b) und einer Fahrzeugstruktur (100a'), die in der Fahrzeugkarosserie (100a) und/oder in der Fahrgastzelle umschlossen ist, verbunden ist.

4. System nach einem der Ansprüche 1-3, wobei die Fahrzeugtür (100b) eine Verriegelungsanordnung (100d), die dazu konfiguriert ist, die mindestens eine verbundene einziehbare Stufe (100c) in Verriegelungseingriff mit der Fahrzeugtür (100b) anzuordnen, umfasst.

5. System nach Anspruch 4, wobei die Verriegelungsanordnung (100d) einen elektronisch gesteuerten Kolben, der dazu angeordnet ist, mindestens einen Riegel der mindestens einen einziehbaren Stufe (100c) vorstehend in der Fahrzeugtür (100b) zu verriegeln, umfasst.

6. System nach einem der Ansprüche 1-5, wobei das System (100-A, 100-B) durch einen Benutzer über Einstellungen in dem Fahrzeug oder durch Aktivieren einer Kindersicherung an der Fahrzeugtür (100b) eingeschaltet wird.

7. Fahrzeug (100'), umfassend das System (100-A, 100-B, 400-A) gemäß einem der Ansprüche 1-6.

8. Verfahren für ein Fahrzeug (100'), umfassend das System (100-A, 100-B, 400-A) gemäß einem der Ansprüche 1-6; wobei das System eine Fahrzeugkarosserie (100a), eine Fahrzeugtür (100b) und mindestens eine einziehbare Stufe (100c) umfasst, wobei die Fahrzeugkarosserie (100a) eine Fahrgastzelle umschließt und eine Fahrzeugtüröffnung (100b') definiert und wobei die Fahrzeugtür (100b) relativ zu der Fahrzeugtüröffnung zwischen einer geschlossenen Position und einer offenen Position bewegbar ist, wobei das Verfahren Folgendes umfasst:
Aktivieren (201) einer Verbindung der mindestens einen einziehbaren Stufe (100c) mit der Fahrzeugtür (100b) und der Fahrzeugkarosserie (100a),
Ausziehen (202) der mindestens einen verbundenen einziehbaren Stufe (100c) durch Bewegung der Fahrzeugtür (100b) in eine Richtung von der geschlossenen Position zu der offenen Position,
Steuern einer erforderlichen Kraft zum Schließen der Fahrzeugtür (100b), wenn sie sich in der offenen Position befindet, durch den Rastmechanismus, der in der Fahrzeugtür (100b) umfasst ist.

9. Verfahren nach Anspruch 8, ferner umfassend den folgenden Schritt:
Einziehen (203) der mindestens einen verbundenen einziehbaren Stufe (100c) durch Bewegung der Fahrzeugtür (100b) in eine Richtung von der offenen Position zu der geschlossenen Position.

10. Verfahren nach einem der Ansprüche 8-9, wobei die mindestens eine einziehbare Stufe (100c) mit der Fahrzeugtür (100b) und einer Fahrzeugstruktur (100a'), die in der Fahrzeugkarosserie (100a) und/oder in der Fahrgastzelle umschlossen ist, verbunden ist.

11. Verfahren nach einem der Ansprüche 8-10, ferner umfassend Verriegeln der mindestens einen verbundenen einziehbaren Stufe (100c) an der Fahrzeugtür (100b) durch eine Verriegelungsanordnung (100d), die in der Fahrzeugtür (100b) umfasst ist.

12. Verfahren nach Anspruch 11, wobei die Verriegelungsanordnung (100d) einen elektronisch gesteuerten Kolben, der dazu angeordnet ist, mindestens einen Riegel der mindestens einen einziehbaren Stufe (100c) vorstehend in der Fahrzeugtür (100b) zu verriegeln, umfasst.

## Revendications

1. Système (100-A, 100-B, 400-A) pour un véhicule (100'), ledit système (100-A, 100-B, 400-A) comprenant une carrosserie de véhicule (100a), une portière de véhicule (100b) et au moins une marche rétractable (100c), dans lequel la carrosserie du véhicule (100a) entoure un habitacle et définit une ouverture de portière de véhicule (100b') et dans lequel la portière de véhicule (100b) est mobile par rapport à l'ouverture de portière de véhicule (100b') entre une position fermée et une position ouverte,
dans lequel l'au moins une marche rétractable (100c) est reliée à la portière de véhicule (100b) et à la carrosserie de véhicule (100a), et dans lequel l'au moins une marche rétractable (100c) reliée peut être étendue à partir d'un état rétracté par un mouvement de la portière de véhicule (100b) dans une direction allant de la position fermée vers la position ouverte, dans lequel l'au moins une marche rétractable (100c) dans un état étendu forme une marche de montée pour monter dans l'habitacle et/ou sortir de celui-ci, dans lequel l'au moins une marche rétractable est agencée sous forme de courroi ou disposée sous forme de plaques solides reliées, dans lequel l'au moins une marche rétractable (100c) est fixée à une extrémité à la portière de véhicule (100b) et l'au moins une marche rétractable (100c) est adaptée pour être dans une position de repos dans la carrosserie de véhicule (100a) à l'état rétracté,
**caractérisé en ce que** la courroie est enroulée sur un rouleau (204) dans la carrosserie du véhicule à l'état rétracté, ou dans lequel les plaques solides reliées sont empilées les unes sur les autres dans un conteneur de stockage (401) relié à la carrosserie du véhicule à l'état rétracté,
**en ce que** la portière de véhicule (100b) comprend un mécanisme de détente configuré pour commander une force requise pour fermer la portière de véhicule (100b) reliée à l'au moins une marche rétractable (100c) lorsqu'elle est en position ouverte, dans lequel le mécanisme de détente retenant la portière de véhicule (100b) en position ouverte est configuré pour être dur de manière commandée de sorte que la portière de véhicule (100b) nécessitera plus de force pour se fermer lorsque l'au moins une marche rétractable (100c) est déployée dans l'état étendu.

2. Système selon la revendication 1, dans lequel l'au moins une marche rétractable (100c) reliée est rétractable par un mouvement de la portière de véhicule (100b) dans une direction allant de la position ouverte vers la position fermée.

3. Système selon l'une quelconque des revendication 1 et 2, dans lequel l'au moins une marche rétractable (100c) est reliée à la portière de véhicule (100b) et à une structure de véhicule (100a') enfermée dans la carrosserie de véhicule (100a) et/ou dans l'habitacle.

4. Système selon l'une quelconque des revendications 1 à 3, dans lequel la portière de véhicule (100b) comprend un agencement de verrouillage (100d) configuré pour disposer l'au moins une marche rétractable (100c) reliée en prise de verrouillage avec la portière de véhicule (100b).

5. Système selon la revendication 4, dans lequel l'agencement de verrouillage (100d) comprend un piston à commande électronique agencé pour verrouiller au moins un verrou de l'au moins une marche rétractable (100c) faisant saillie dans la portière de véhicule (100b).

6. Système selon l'une quelconque des revendications 1 à 5, dans lequel le système (100-A, 100-B) est activé par un utilisateur au moyen de paramètres dans le véhicule ou par activation d'une sécurité enfants sur la portière de véhicule (100b) .

7. Véhicule (100') comprenant le système (100-A, 100-B, 400-A) selon l'une quelconque des revendications 1 à 6.

8. Procédé pour un véhicule (100') comprenant le système (100-A, 100-B, 400-A) selon l'une quelconque des revendications 1 à 6 ; dans lequel le système comprend une carrosserie de véhicule (100a), une portière de véhicule (100b) et au moins une marche rétractable (100c), dans lequel la carrosserie de véhicule (100a) renferme un habitacle et définit une ouverture de portière de véhicule (100b') et dans lequel la portière de véhicule (100b) est mobile par rapport à l'ouverture de la portière de véhicule entre une position fermée et une position ouverte, le procédé comprenant :
l'activation (201) d'une liaison de l'au moins une marche rétractable (100c) à la portière de véhicule (100b) et à la carrosserie de véhicule (100a),
l'extension (202) de l'au moins une marche rétractable (100c) reliée par un mouvement de la portière de véhicule (100b) dans une direction allant de la position fermée vers la position ouverte,
commandant une force requise pour fermer la portière de véhicule (100b) lorsqu'elle est en position ouverte par le mécanisme de détente compris dans la portière de véhicule (100b) .

9. Procédé selon la revendication 8, comprenant en outre l'étape suivante :
la rétraction (203) de l'au moins une marche rétractable (100c) reliée par un mouvement de la portière de véhicule (100b) dans une direction allant de la position ouverte vers la position fermée.

10. Procédé selon l'une quelconque des revendications 8 et 9, dans lequel l'au moins une marche rétractable (100c) est reliée à la portière de véhicule (100b) et à une structure de véhicule (100a') enfermée dans la carrosserie de véhicule (100a) et/ou dans l'habitacle.

11. Procédé selon l'une quelconque des revendications 8 à 10, comprenant en outre le verrouillage de l'au moins une marche rétractable (100c) reliée à la portière de véhicule (100b) par un agencement de verrouillage (100d) compris dans la portière de véhicule (100b).

12. Procédé selon la revendication 11, dans lequel l'agencement de verrouillage (100d) comprend un piston à commande électronique agencé pour verrouiller au moins un verrou de l'au moins une marche rétractable (100c) faisant saillie dans la portière de véhicule (100b).
